# EUROPEAN PATENT APPLICATION

(11) **EP 4 617 921 A1**
(43) Date of publication of application: **17.09.2025**
(21) Application number: 24163560.6
(22) Date of filing: 14.03.2024
(51) Int. Cl.: G06F 18/214, G06V 10/82, G06V 20/64

(54) **METHOD FOR EVALUATING IMAGES AND METHOD FOR TRAINING AN ARTIFICIAL INTELLIGENCE**

(71) Applicant: Koninklijke Philips N.V., 5656 AG Eindhoven (NL)
(72) Inventor: SABCZYNSKI, Jörg, Eindhoven (NL); KRUEGER, Sascha, Eindhoven (NL); SOMMER, Karsten, 5656AG Eindhoven (NL); SENEGAS, Julien Thomas, Eindhoven (NL)
(74) Representative: Philips Intellectual Property & Standards

(57) **Abstract**

The invention relates to a method (1) for evaluating images in a medical environment, wherein at least one image of a medical setting is acquired (S1), fed (S2) as input into a trained artificial intelligence and processed (S3). A plurality of keypoints (5) of medical objects (3) is received (S4) as an output from the trained artificial intelligence, and positioning information of the medical objects (3) in the medical setting is determined (S5) based on the received plurality of keypoints (5). The invention further relates to a method (2) for training an artificial intelligence, wherein 3D model data for a medical object (3) is acquired (S7), a plurality of keypoints (5) for the medical object (3) is determined (S8), a plurality of synthetic training images is generated (S9) based on the 3D model data, and the artificial intelligence is trained (S10) with the plurality of synthetic training images to recognize the plurality of keypoints (5).

## Description

### FIELD OF THE INVENTION

The invention relates to data processing in a medical setting. In particular, the invention relates to a method for evaluating images. Further, the invention relates to a method for training an artificial intelligence. Moreover, the invention relates to a corresponding computer program product and a corresponding data processing device.

### BACKGROUND OF THE INVENTION

In a medical setting such as a medical imaging setting, in order to implement workflow support, it is often necessary to localize objects in space. For example, in magnetic resonance (MR) images, it would be advantageous to locate the exact position and orientation of MR coils, which the technician places on the patient prior to imaging.

For this purpose, external cameras that are, e.g., placed above a patient table have been shown to be suitable tools, since cameras allow to accurately localize objects or keypoints on objects.

In order to localize the objects (e.g., the MR coils) in the images taken by such an external camera, image processing algorithms are used, which detect and localize the object in the image. Object detection and object localization may be performed with feature-based approaches or using neural networks. These neural networks are trained on a large number of training images, for which the true position and orientation of the object or keypoints on the object is known. Once trained, the neural network can be fed with camera images as input and returns an object position or a keypoint position as output.

In order to take pictures for training data, a typical workflow to generate the training images can be referred to as "studio approach". In this approach, the object needs to be placed manually, preferably in many setups, in a large variety of different positions and orientations, with different lighting conditions and with different background objects. This is a tedious and time-consuming work, therefore only a limited amount of training data can be generated with this approach. Further, this leads to a trained network which cannot generalize to images that are out of the training distribution. Furthermore, in a second step, the reference values which the network shall learn to extract from the input images need to be identified. The position and orientation of the object or the position of the keypoints on the object need to be identified manually, the so-called "ground truth labelling". This again is a time-consuming work, which in addition is error prone, especially for visually hidden keypoints, and can lead to noise in the training data, limiting the performance of the so trained network. An alternative approach is to use another already existing labelling software to label the training images, but this leads the network to mimicking the performance of this software without improving its performance.

### SUMMARY OF THE INVENTION

It is therefore an object of the present invention to provide an improved method for training an artificial intelligence and an improved method for evaluating images using a trained artificial intelligence. It is a further object of the present invention to provide a corresponding computer program product and a corresponding data processing device.

The object of the present invention is solved by the subject matter of the independent claims, wherein further embodiments are incorporated in the dependent claims.

In an aspect of the present invention, a method for evaluating images in a medical environment is provided. In this context, "image" is to be understood in a broad sense, in particular as a two-dimensional or three-dimensional array of data. The term "medical environment" is also to be understood in a broad sense, and may, in particular, refer to a doctor's office, a hospital, or a mobile medical environment. More particularly, the medical environment may be the environment of a medical imaging device, e.g., a magnetic resonance imaging (MRI) device, a computed tomography (CT) imaging device, or a digital X-ray imaging device.

According to the method, at least one image of a medical setting is acquired. In particular, said at least one image may be acquired by a sensor or by a sensor system. Two or more images may be acquired by the same sensor (e.g., with different points of view, or at different times) and/or by different sensors. The term "medical setting" refers to a setting in the medical environment, e.g., a room within the medical environment and/or a region of interest within the medical environment. As an example, the medical setting may comprise the area covered by a medical imaging device. As another example, the medical setting may comprise a patient and medical objects that have been placed in, at, and/or around the patient.

The at least one image is fed as input into a trained artificial intelligence. Said trained artificial intelligence may be a neural network, in particular a deep convolutional neural network. The artificial intelligence may have been trained with training images, e.g., according to the method described below.

The trained artificial intelligence processes the at least one image. That is, the artificial intelligence takes the at least one image as input and generates output corresponding to the input, in particular by inference.

The artificial intelligence is trained to generate a plurality of keypoints of medical objects as an output. This plurality of keypoints of medical objects is received as an output from the trained artificial intelligence. The medical objects may be any kind of medical objects, in particular medical objects that are placed in, at, or around the patient. As examples, the medical objects may comprise radiofrequency coils, injectors along with injector tubes and/or lead gowns. Keypoints of the medical objects refer to points of the medical objects that have been identified when training the artificial intelligence. In particular, said keypoints may be characteristic points of the medical objects and/or points of the medical objects that are well suited for determining a position and an orientation of the medical object.

Based on the received plurality of keypoints, positioning information of the medical objects in the medical setting is determined. This positioning information may then be output and/or forwarded. As an example, the positioning information may be output to a screen such that medical staff can evaluate it and/or use it for further tasks, hence supporting the workflow of the medical staff. As another example, the positioning information may be forwarded to a control unit of a medical imaging system, such that the control unit can control the medical imaging system based on the positioning information. With the determined positioning information, medical workflows may be improved and/or the operation of medical devices, e.g., medical imaging devices, may be improved, since a precise knowledge of the locations of medical objects is useful for many tasks.

According to an embodiment, the at least one image is acquired by a visual camera. In this context, a visual camera is a camera that detects visible light. In particular, the visual camera may be a black-and-white camera or a color camera, e.g., an RGB camera. Alternatively, or additionally, the at least one image is acquired by a depth camera. In this context, a depth camera is a camera that assigns distances from the camera sensor to objects to pixels of the image. Said depth camera may be based, e.g., on time-of-flight measurements, on stereo vision, or more generally on multi-view vision. Alternatively, or additionally, the at least one image is acquired by a visual-and-depth camera, which is a combination of a visual camera and a depth camera. For example, the visual-and-depth camera may be an RGB-D camera. Alternatively, or additionally, the at least one image is acquired by a near infrared camera. Said near infrared camera is particularly sensitive to light with wavelengths between 760 nm and 2.5 µm. Alternatively, or additionally, the at least one image is acquired by a thermal camera. Said thermal camera is particularly sensitive to light with wavelengths between 1 µm and 14 µm. Alternatively, or additionally, the at least one image is acquired by a radar or a lidar. Alternatively, or additionally, the at least one image is acquired by a medical imaging device, such as an MRI device, a CT device, a digital X-ray imaging device, or an ultrasound imaging device. Yet alternatively, or additionally, the at least one image is acquired by a pressure mat. In this case, the "image" is a two-dimensional array of pressures sensed by the pressure mat. The pressure mat may be, e.g., placed underneath the patient. As indicated, it is possible, and may be advantageous, to use different sensors or sensor systems to acquire the images. The specific sensor or sensor system used to acquire the at least one image may be chosen based on the application, in particular on the medical objects to be detected.

According to an embodiment, the positioning information of the medical objects comprises positions and/or orientations of the medical objects. In particular, the position of a predetermined point of the medical object and the orientation of the medical object contain enough information to completely describe the positioning of a rigid medical object.

According to an embodiment, the step of determining positioning information of the medical objects comprises performing a regression analysis based on the received plurality of keypoints. As an example, for a visual image, the keypoints are given as two-dimensional coordinates in the image and optical characteristics of the camera, such as focal length of the lens and pixel pitch, are known. Then, the coordinates of the keypoints correspond to straight lines extending from the location of the camera, and a multi-dimensional regression is performed on the location of the keypoints on said straight lines, with the condition that the keypoints correspond to points of the medical object, the size and shape of which are also known. As another example, for a visual-and-depth image, the three-dimensional coordinates of the keypoints are already determined by the camera. As yet another example, the artificial intelligence may have been trained to output three-dimensional coordinates for the keypoints, in which case these three-dimensional coordinates may be used for determining the positioning information of the medical objects.

According to an embodiment, the medical object is flexible and/or has moving parts. That is, the medical object is not just a rigid body. As an example, a flexible medical object may be a flexible MR coil, a cable, or a tube. As another example, a medical object with a moving part may be a knee coil, comprising a base plate, a bottom part and a top part, wherein the bottom part may rotate relative to the base plate and the top part is removable and has a rotating lever. In this case, a parametrization with deformation parameters is provided to describe the flexibility of the medical object and/or the moving parts. For a flexible object, said parameterization may be, e.g., given in terms of bending modes. For an object with moving parts, the parametrization may be, e.g., given by a rotation angle and/or a translation distance of the moving part. The range of possible deformation parameters is also known for a given medical object. Then, the positioning information of the medical object further comprises the deformation parameters. That is, the deformation parameters may also be determined based on the plurality of keypoints. This may also be performed with a regression analysis that comprises said deformation parameters. When the deformation parameters are known, precise positioning information even of flexible medical objects and medical objects with moving parts may be obtained, said positioning information including the deformation parameters, i.e., taking account of the varying shape of the medical object.

According to an embodiment, the medical object comprises at least one internal element. As an example, an internal element may be a coil winding within an MR coil. As another example, an internal element may be an internal cable within an electronic medical object. The method further comprises determining positioning information of the internal element based on the positioning information of the medical object. In this context, positioning information of the internal element may comprise a position, an orientation, and/or a deformation of the internal element. For rigid medical objects, the position of said internal element is known with respect to a reference point of the medical object, hence the determination of the positioning information of the internal element is merely given by a translation and rotation given the positioning information of the medical object. For flexible medical objects and/or medical objects with moving parts, the determination of the positioning information of the internal element also has to take into account the deformation parameters. This may be done, e.g., by providing an analytical function of the position in dependence on the deformation parameters, or by using a lookup-table that contains the position of the internal element with respect to the medical object in dependence on the deformation parameters, and interpolation to the given deformation parameters. With this, the position of the internal elements, which are often most interesting to a user or for a control unit of a medical device, is even more precisely determined.

In another aspect of the present invention, a method for training an artificial intelligence is provided. In particular, the artificial intelligence is trained for use in a medical environment, wherein the term "medical environment" is to be understood in a broad sense, and may, in particular, refer to a doctor's office, a hospital, or a mobile medical environment. More particularly, the medical environment may be the environment of a medical imaging device, e.g., a magnetic resonance imaging (MRI) device, a computed tomography (CT) imaging device, or a digital X-ray imaging device. More particularly, the artificial intelligence may be used in the method for evaluating images in a medical environment according to the above description.

According to the method, 3D model data, i.e., three-dimensional model data, is acquired for a medical object. Such 3D model data is generally known for medical objects or can be easily generated. The medical objects may be any kind of medical objects, in particular medical objects that are placed in, at, or around the patient. As examples, the medical objects may comprise radiofrequency coils, cables, injectors along with injector tubes and/or lead gowns.

Further, a plurality of keypoints is determined for the medical object. In particular, said keypoints may be characteristic points of the medical object and/or points of the medical object that are well suited for determining a position and an orientation of the medical object. The determination of the keypoints may be performed manually by a user, e.g., by indicating said keypoints in the 3D model data, or automatically, e.g., by finding points with maximal surface curvature. In particular, the keypoints may be determined in a coordinate system of the medical object. Also, virtual keypoints such as a center point of the medical object, may be chosen.

Based on the 3D model data, a plurality of synthetic training images of the medical object with the associated plurality of keypoints is generated. Said synthetic training images are computed based on the 3D model data. For every synthetic training image, the location of the keypoints on said synthetic training image is determined and associated with the respective synthetic training image. That is, the keypoints are "labels" in the respective image. For the determination of the keypoints on the synthetic training image, the keypoints may first be calculated in scene coordinates and then converted to image coordinates. In this context, "image" is to be understood in a broad sense, in particular as a two-dimensional or three-dimensional array of data. More particularly, the synthetic training images may be synthetic images as if taken with a visual camera, a depth camera, a visual-and-depth camera, a near infrared camera, a thermal camera, a radar, a lidar, a medical imaging device, and/or a pressure mat.

With the plurality of synthetic training images and the associated keypoints, the artificial intelligence is trained to recognize the plurality of keypoints. That is, for the training, the synthetic training images are used as input, and the expected output are the keypoints. The artificial intelligence may be trained to recognize the two-dimensional coordinates of the keypoints, or to recognize the three-dimensional coordinates of the keypoints. Since the synthetic training images are automatically generated, it is easy to generate a plurality of synthetic training images, such that the output generated by the trained artificial intelligence is accurate and reliable. Further, it is possible to use virtual keypoints, i.e., keypoints that cannot be directly seen on the surface of the medical object, such as a center of the medical object.

According to an embodiment, the artificial intelligence is a neural network, more particularly a deep convolutional neural network. A neural network, in particular a deep convolutional neural network, is particularly well suited for image processing, as for the present method.

According to an embodiment, the 3D model data is CAD data. Said CAD data is often readily available, e.g., from a design and product development process, and is well suited for the present method. The CAD data may be provided in a STEP format, or in other formats.

Alternatively, or additionally, in particular, if no CAD data is available for a medical object, a 3D model for the medical object may be generated by inspecting the medical object. For example, a 3D model may be generated by rotating a camera around the medical object, taking images while rotating the camera, and processing these images to obtain the 3D model, i.e., the 3D model may be obtained using photogrammetry. As another example, a 3D model may be obtained from a CT scan of the medical object.

According to an embodiment, the step of generating a plurality of synthetic training images comprises converting the CAD data to a surface mesh. The surface mesh may be obtained, e.g., in an OBJ format or an STL format. Optionally, the resulting mesh may be cleaned and/or corresponding color values and/or materials may be assigned to the mesh. Depending on the physical imaging process involved, this conversion can also focus on other elements of the CAD data. For example, to simulate thermal images, the position of electrical components and circuitry including typical currents and specific thermodynamic material parameters are assigned (in particular, thermal capacity, thermal conductivity, and/or thermal emissivity). For LIDAR and RADAR, depending on the respective part of the electromagnetic spectrum to be used the respective material reflectivities are simulated.

As an example for the generation of synthetic training images, the generation of synthetic training images that appear to be taken with a camera is presented. The generation of synthetic training images taken by other sensors or sensor systems is similar. Once the surface mesh has been determined, it is fed into a computer graphics application, more particularly a rendering engine, such as a raytracing engine. In the rendering engine, a virtual camera, virtual light sources, backgrounds and the medical object are arranged as a virtual scene, and a synthetic image taken by the camera is computed by the rendering engine. The rendering engine may host a physical engine to establish the physical properties of the scenery components and relevant image producing physical effects.

As another example, the generation of synthetic two-dimensional arrays of pressures that appear to be measured by a pressure mat is presented. In this case, a weight distribution of the medical device may be modeled and a pressure exerted by the medical device on the pressure mat may be determined, e.g., depending on a position and an orientation of the medical device and on the presence of other elements on the pressure mat.

As yet another example, the generation of thermal images that appear to be taken by a thermal camera is presented. In this case, the emission of heat by the medical device may be modelled, e.g., under different circumstances such as voltages and/or currents used to drive the medical device, and/or as a function of the position and/or orientation of the medical device and/or the presence of other elements in the background.

According to an embodiment, the step of generating a plurality of synthetic training images comprises varying scene parameters for each of the plurality of synthetic training images. That way, different synthetic images are obtained, such that the trained artificial intelligence can recognize the medical objects and the associated keypoints in a variety of situations. In particular, the scene parameters may be varied randomly, more particularly within a predetermined range. The scene parameters comprise a position and/or an orientation of the medical object, in particular the surface mesh, relative to a virtual camera or relative to another virtual sensor or virtual sensor system. Additionally, or alternatively, the scene parameters comprise a background. Said background may be given by background images randomly chosen from a picture database. Additionally, or alternatively, the scene parameters comprise a number, a position, an orientation, a color, and/or an intensity of virtual light sources or of virtual sources of other electromagnetic radiation. Additionally, or alternatively, the scene parameters comprise a color, a specularity, and/or a texture of the surface mesh. Additionally, or alternatively, the scene parameters comprise characteristic parameters of the sensor, such as different focal lengths of the camera or different sensitivity response functions of the camera sensor or of the pressure mat.

According to an embodiment, the medical object is flexible and/or has moving parts. That is, the medical object is not just a rigid body. As an example, a flexible medical object may be a flexible MR coil, a cable, or a tube. As another example, a medical object with a moving part may be a knee coil, comprising a base plate, a bottom part and a top part, wherein the bottom part may rotate relative to the base plate and the top part is removable and has a rotating lever. In this case, a parametrization with deformation parameters is provided to describe the flexibility of the medical object and/or the moving parts. For a flexible object, said parameterization may be, e.g., given in terms of bending modes. For an object with moving parts, the parametrization may be, e.g., given by a rotation angle and/or a translation distance of the moving part. The range of possible deformation parameters is also known for a given medical object. The scene parameters further comprise the deformation parameters. Hence, the deformation parameters may also be chosen randomly when generating the synthetic training images. That is, the training of the artificial intelligence is performed with various deformations of the medical object, such that the medical object and the associated keypoints may also be recognized for a deformed medical object.

According to an embodiment, the artificial intelligence is trained to further recognize at least one of the scene parameters. That is, the at least one of the scene parameters is used along with the keypoints as label for the synthetic training images, and the output of the artificial intelligence comprises the at least one of the scene parameters. In particular, the artificial intelligence may be trained to recognize the position and/or orientation of the medical object relative to the virtual camera, or to recognize the deformation parameters.

Additionally, or alternatively, the artificial intelligence may be trained to further recognize a label of the medical device, such as a type or a sub-type of the medical device, e.g., the MR coil.

In yet another aspect of the present invention, a computer program product is provided. The computer program product comprises instructions which, when the program is executed by a computing unit, cause the computing unit to carry out the method for evaluating images in a medical environment according to the above description and/or the method for training an artificial intelligence according to the above description. Hence, the computer program product provides an improved evaluation of images and/or an improved training of the artificial intelligence. Further details, embodiments and advantages of the computer program product correspond to the respective methods described above.

In yet another aspect of the present invention, a data processing device is provided. The data processing device comprises means for carrying out the method for evaluating images in a medical environment according to the above description and/or the method for training an artificial intelligence according to the above description. Hence, the data processing device provides an improved evaluation of images and/or an improved training of the artificial intelligence. Further details, embodiments and advantages of the data processing device correspond to the respective methods described above. As an example, the data processing device may be part of a control unit of a medical imaging device.

It shall be understood that a preferred embodiment of the invention can also be any combination of the dependent claims with the respective independent claim. Further, it has to be noted that embodiments of the invention are described with reference to different subject matters. In particular, some embodiments are described with reference to device type claims whereas other embodiments are described with reference to method type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

These and other aspects of the invention will be apparent from and elucidated with reference to the embodiments described hereinafter.

### BRIEF DESCRIPTION OF THE DRAWINGS

In the following, preferred embodiments of the invention will be described, by way of example only, and with reference to the drawings in which:
Fig. 1 shows a flowchart of an embodiment of a method for evaluating images;
Fig. 2 shows a flowchart of another embodiment of a method for evaluating images;
Fig. 3 shows a flowchart of an embodiment of a method for training an artificial intelligence;
Fig. 4 shows a flowchart of an embodiment of the step of generating a plurality of training images; and
Fig. 5 shows a schematic view of an embodiment of a medical object.

In the figures, elements which correspond to elements already described may have the same reference numerals. Examples, embodiments or optional features, whether indicated as non-limiting or not, are not to be understood as limiting the invention as claimed.

### DETAILED DESCRIPTION OF EMBODIMENTS

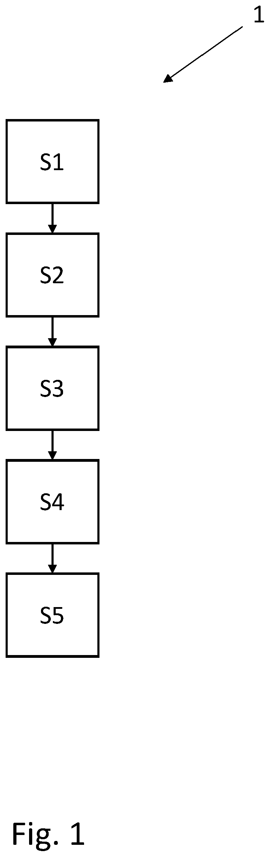

Fig. 1 shows a flowchart of an embodiment of a method 1 for evaluating images in a medical environment. In this context, "image" is to be understood in a broad sense, in particular as a two-dimensional or three-dimensional array of data. The term "medical environment" is also to be understood in a broad sense, and may, in particular, refer to a doctor's office, a hospital, or a mobile medical environment. More particularly, the medical environment may be the environment of a medical imaging device, e.g., a magnetic resonance imaging (MRI) device, a computed tomography (CT) imaging device, or a digital X-ray imaging device.

According to the method 1, at least one image of a medical setting is acquired S1. In particular, said at least one image may be acquired by a sensor or by a sensor system. Two or more images may be acquired by the same sensor (e.g., with different points of view, or at different times) and/or by different sensors. In particular, the at least one image may be acquired S1 by a visual camera, a depth camera, a visual-and-depth camera, a near infrared camera, a thermal camera, a radar, a lidar, a medical imaging device, and/or a pressure mat.

The at least one image is fed S2 as input into a trained artificial intelligence. Said trained artificial intelligence may be a neural network, in particular a deep convolutional neural network. The artificial intelligence may have been trained with training images.

The trained artificial intelligence processes S3 the at least one image. That is, the artificial intelligence takes the at least one image as input and generates output corresponding to the input, in particular by inference.

The artificial intelligence is trained to generate a plurality of keypoints of medical objects as an output. This plurality of keypoints of medical objects is received S4 as an output from the trained artificial intelligence. The medical objects may be any kind of medical objects, in particular medical objects that are placed in, at, or around the patient. As examples, the medical objects may comprise radiofrequency coils, injectors along with injector tubes and/or lead gowns. Keypoints of the medical objects refer to points of the medical objects that have been identified when training the artificial intelligence. In particular, said keypoints may be characteristic points of the medical objects and/or points of the medical objects that are well suited for determining a position and an orientation of the medical object.

Based on the received plurality of keypoints, positioning information of the medical objects in the medical setting is determined S5. Said positioning information may comprise positions and/or orientations of the medical objects. Determining S5 the positioning information of the medical objects may comprise performing a regression analysis based on the received plurality of keypoints. The positioning information may then be output and/or forwarded. As an example, the positioning information may be output to a screen such that medical staff can evaluate it and/or use it for further tasks, hence supporting the workflow of the medical staff. As another example, the positioning information may be forwarded to a control unit of a medical imaging system, such that the control unit can control the medical imaging system based on the positioning information. With the determined S5 positioning information, medical workflows may be improved and/or the operation of medical devices, e.g., medical imaging devices, may be improved, since a precise knowledge of the locations of medical objects is useful for many tasks.

The medical object may be flexible and/or may have moving parts. Then, a parametrization with deformation parameters may be provided to describe the flexibility of the medical object and/or the moving parts. In this case, the positioning information of the medical object may further comprise the deformation parameters.

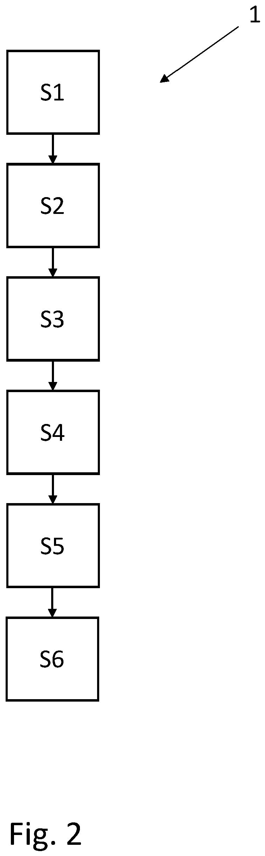

Fig. 2 shows a flowchart of another embodiment of a method 1 for evaluating images. In this embodiment, the medical object comprises at least one internal element. As an example, an internal element may be a coil winding within an MR coil. As another example, an internal element may be an internal cable within an electronic medical object. The method 1 further comprises determining S6 positioning information of the internal element based on the positioning information of the medical object. In this context, positioning information of the internal element may comprise a position, an orientation, and/or a deformation of the internal element. For rigid medical objects, the position of said internal element is known with respect to a reference point of the medical object, hence the determination S6 of the positioning information of the internal element is merely given by a translation and rotation given the positioning information of the medical object. For flexible medical objects and/or medical objects with moving parts, the determination S6 of the positioning information of the internal element also has to take into account the deformation parameters. This may be done, e.g., by providing an analytical function of the position in dependence on the deformation parameters, or by using a lookup-table that contains the position of the internal element with respect to the medical object in dependence on the deformation parameters, and interpolation to the given deformation parameters. With this, the position of the internal elements, which are often most interesting to a user or for a control unit of a medical device, is even more precisely determined.

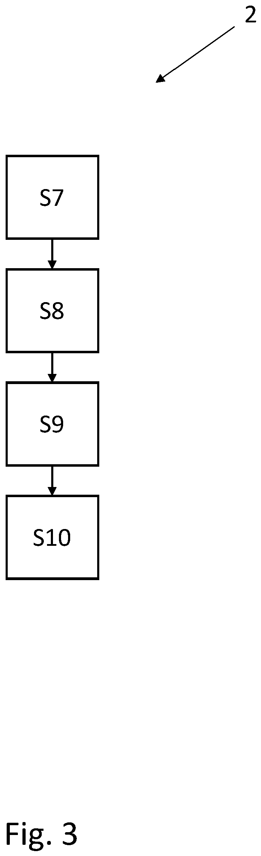

Fig. 3 shows a flowchart of an embodiment of a method 2 for training an artificial intelligence. In particular, the artificial intelligence is trained for use in a medical environment, wherein the term "medical environment" is to be understood in a broad sense, and may, in particular, refer to a doctor's office, a hospital, or a mobile medical environment. More particularly, the medical environment may be the environment of a medical imaging device, e.g., a magnetic resonance imaging (MRI) device, a computed tomography (CT) imaging device, or a digital X-ray imaging device. More particularly, the artificial intelligence may be used in the method 1 for evaluating images in a medical environment described above. The artificial intelligence may be a neural network, more particularly a deep neural network.

According to the method, 3D model data, i.e., three-dimensional model data, is acquired S7 for a medical object. Such 3D model data is generally known for medical objects or can be easily generated. For example, the 3D model data may be CAD data. The medical objects may be any kind of medical objects, in particular medical objects that are placed in, at, or around the patient. As examples, the medical objects may comprise radiofrequency coils, cables, injectors along with injector tubes and/or lead gowns.

Further, a plurality of keypoints is determined S8 for the medical object. In particular, said keypoints may be characteristic points of the medical object and/or points of the medical object that are well suited for determining a position and an orientation of the medical object. The determination of the keypoints may be performed manually by a user, e.g., by indicating said keypoints in the 3D model data, or automatically, e.g., by finding points with maximal surface curvature. In particular, the keypoints may be determined in a coordinate system of the medical object. Also, virtual keypoints such as a center point of the medical object, may be chosen.

Based on the 3D model data, a plurality of synthetic training images of the medical object with the associated plurality of keypoints is generated S9. Said synthetic training images are computed based on the 3D model data. For every synthetic training image, the location of the keypoints on said synthetic training image is determined and associated with the respective synthetic training image. That is, the keypoints are "labels" in the respective image. For the determination of the keypoints on the synthetic training image, the keypoints may first be calculated in scene coordinates and then converted to image coordinates. In this context, "image" is to be understood in a broad sense, in particular as a two-dimensional or three-dimensional array of data. More particularly, the synthetic training images may be synthetic images as if taken with a visual camera, a depth camera, a visual-and-depth camera, a near infrared camera, a thermal camera, a radar, a lidar, a medical imaging device, and/or a pressure mat.

With the plurality of synthetic training images and the associated keypoints, the artificial intelligence is trained S10 to recognize the plurality of keypoints. That is, for the training S10, the synthetic training images are used as input, and the expected output are the keypoints. The artificial intelligence may be trained S10 to recognize the two-dimensional coordinates of the keypoints, or to recognize the three-dimensional coordinates of the keypoints. Since the synthetic training images are automatically generated, it is easy to generate a plurality of synthetic training images, such that the output generated by the trained artificial intelligence is accurate and reliable. Further, it is possible to use virtual keypoints, i.e., keypoints that cannot be directly seen on the surface of the medical object, such as a center of the medical object.

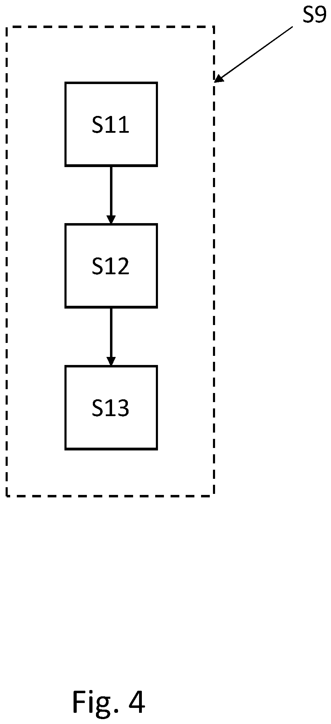

Fig. 4 shows a flowchart of an embodiment of the step of generating S9 a plurality of training images. If the 3D model data is given as CAD data, the step of generating S9 a plurality of training images comprises converting S11 the CAD data to a surface mesh.
Further, the step of generating S9 a plurality of training images comprises varying S12 scene parameters for each of the plurality of synthetic training images. For each single one of the synthetic training images, this may mean randomly choosing the scene parameters. Said scene parameters comprise a position and/or an orientation of the medical object relative to a virtual camera; a background; a number, position, orientation, color and/or intensity of virtual light sources; and/or a color, specularity and/or texture of the surface mesh. Finally, once the scene parameters have been chosen, the synthetic training image is rendered S13 using the scene parameters.

In an example, the medical object may be flexible and/or may have moving parts. That is, the medical object may not just be a rigid body. As an example, a flexible medical object may be a flexible MR coil, a cable, or a tube. As another example, a medical object with a moving part may be a knee coil, comprising a base plate, a bottom part and a top part, wherein the bottom part may rotate relative to the base plate and the top part is removable and has a rotating lever. In this case, a parametrization with deformation parameters may be provided to describe the flexibility of the medical object and/or the moving parts. For a flexible object, said parameterization may be, e.g., given in terms of bending modes. For an object with moving parts, the parametrization may be, e.g., given by a rotation angle and/or a translation distance of the moving part. The range of possible deformation parameters may also be known for a given medical object. The scene parameters may further comprise the deformation parameters. Hence, the deformation parameters may also be chosen randomly when generating S9 the synthetic training images. That is, the training S10 of the artificial intelligence may be performed with various deformations of the medical object, such that the medical object and the associated keypoints may also be recognized for a deformed medical object.

In another example, the artificial intelligence may be trained S10 to further recognize at least one of the scene parameters. That is, the at least one of the scene parameters may be used along with the keypoints as label for the synthetic training images, and the output of the artificial intelligence may comprise the at least one of the scene parameters. In particular, the artificial intelligence may be trained to recognize the position and/or orientation of the medical object relative to the virtual camera, or to recognize the deformation parameters.

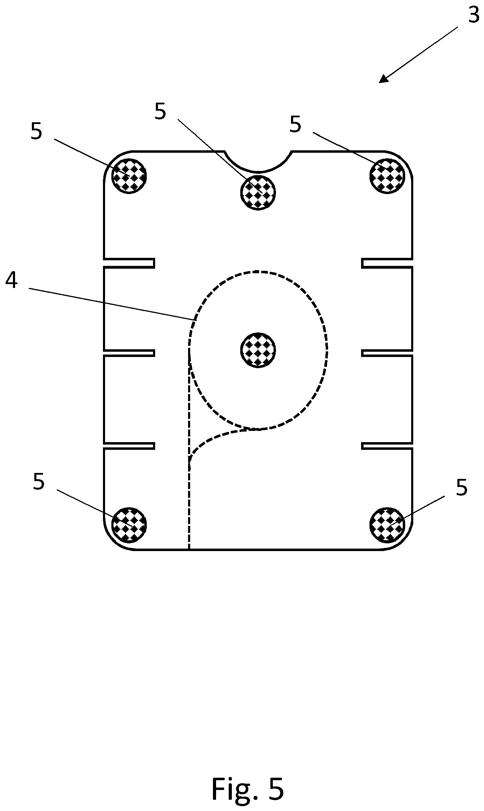

Fig. 5 shows a schematic view of an embodiment of a medical object 3, here shown as a flexible MR coil. The medical object 3 comprises internal elements 4, which are shown as coil windings and cables. The internal elements 4 are illustrated with a dashed line, since they cannot be seen from the outside. Further, a plurality of keypoints 5 is shown. These keypoints 5 are exemplary and have been chosen at characteristic locations of the medical object 3. The keypoint 5 at the center of the medical object 3 is a virtual keypoint that identifies said center. These keypoints 5 are used as labels when the artificial intelligence is trained and are obtained as output from the artificial intelligence. Based on said keypoints 5, positioning information of the medical object 3 may then be determined.

Not shown here is a computer program product that comprises instructions which, when the program is executed by a computing unit, cause the computing unit to carry out the method 1 for evaluating images and/or the method 2 for training an artificial intelligence.

Also not shown here is a data processing device that comprises means for carrying out the method 1 for evaluating images and/or the method 2 for training an artificial intelligence.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

### LIST OF REFERENCE SIGNS:

- 1: method for evaluating images
- 2: method for training an artificial intelligence
- 3: medical object
- 4: internal element
- 5: keypoint

- S1: acquiring at least one image
- S2: feeding the at least one image as input
- S3: processing the at least one image
- S4: receiving a plurality of keypoints
- S5: determining positioning information of the medical objects
- S6: determining positioning information of the internal element
- S7: acquiring 3D model data
- S8: determining a plurality of keypoints
- S9: generating a plurality of synthetic training images
- S10: training the artificial intelligence
- S11: converting CAD data to a surface mesh
- S12: varying scene parameters
- S13: rendering synthetic training images

## Claims

1. A method (1) for evaluating images in a medical environment, comprising:
acquiring (S1) at least one image of a medical setting;
feeding (S2) the at least one image as input into a trained artificial intelligence;
processing (S3), by the trained artificial intelligence, the at least one image;
receiving (S4) a plurality of keypoints (5) of medical objects (3) as an output from the trained artificial intelligence;
determining (S5) positioning information of the medical objects (3) in the medical setting based on the received plurality of keypoints (5).

2. The method (1) according to claim 1, wherein the at least one image is acquired (S1) by a visual camera, a depth camera, a visual-and-depth camera, a near infrared camera, a thermal camera, a radar, a lidar, a medical imaging device, and/or a pressure mat.

3. The method (1) according to claim 1 or 2, wherein the positioning information of the medical objects (3) comprises positions and/or orientations of the medical objects (3).

4. The method (1) according to any one of claims 1 to 3, wherein the step of determining (S5) positioning information of the medical objects (3) comprises performing a regression analysis based on the received plurality of keypoints (5).

5. The method (1) according to any one of claims 1 to 4, wherein the medical object (3) is flexible and/or has moving parts, a parametrization with deformation parameters is provided to describe the flexibility of the medical object (3) and/or the moving parts, and the positioning information of the medical object (3) further comprises the deformation parameters.

6. The method (1) according to any one of claims 1 to 5, wherein the medical object (3) comprises at least one internal element (4) and the method (1) further comprises:
determining (S6) positioning information of the internal element (4) based on the positioning information of the medical object (3).

7. A method (2) for training an artificial intelligence, comprising:
acquiring (S7) 3D model data for a medical object (3);
determining (S8) a plurality of keypoints (5) for the medical object (3);
generating (S9) a plurality of synthetic training images of the medical object (3) with the associated plurality of keypoints (5) based on the 3D model data;
training (S10) the artificial intelligence with the plurality of synthetic training images to recognize the plurality of keypoints (5).

8. The method (2) according to claim 7, wherein the artificial intelligence is a neural network, more particularly a deep convolutional neural network.

9. The method (2) according to claim 7 or 8, wherein the 3D model data is CAD data.

10. The method (2) according to any one of claims 7 to 9, wherein the step of generating (S9) a plurality of synthetic training images comprises converting (S11) the CAD data to a surface mesh.

11. The method (2) according to any one of claims 7 to 10, wherein the step of generating (S9) a plurality of synthetic training images comprises varying (S12) scene parameters for each of the plurality of synthetic training images, wherein the scene parameters comprise at least one out of:
a position and/or an orientation of the medical object (3) relative to a virtual camera;
a background;
a number, position, orientation, color and/or intensity of virtual light sources; and
a color, specularity and/or texture of the surface mesh.

12. The method (2) according to claim 11, wherein the medical object (3) is flexible and/or has moving parts, a parametrization with deformation parameters is provided to describe the flexibility of the medical object (3) and/or the moving parts, and the scene parameters further comprise the deformation parameters.

13. The method (2) according to claim 11 or 12, wherein the artificial intelligence is trained to further recognize at least one of the scene parameters.

14. A computer program product comprising instructions which, when the program is executed by a computing unit, cause the computing unit to carry out the method (1) according to any one of claims 1 to 6 and/or the method (2) according to any one of claims 7 to 13.

15. A data processing device comprising means for carrying out the method (1) according to any one of claims 1 to 6 and/or the method (2) according to any one of claims 7 to 13.
